# EUROPEAN PATENT APPLICATION

(11) **EP 3 112 118 A1**
(43) Date of publication of application: **04.01.2017**
(21) Application number: 16167386.8
(22) Date of filing: 28.04.2016
(51) Int. Cl.: B29C 43/12, B29C 70/44

(54) **METHOD AND APPARATUS FOR PRODUCING A COMPONENT BY USE OF A VACUUM FILM**

(30) Priority: 24.06.2015 DE 102015211671
(71) Applicant: Airbus Operations GmbH, 21129 Hamburg (DE)
(72) Inventor: Fideu, Paulin, 21129 Hamburg (DE); Seegel, Hauke, 21129 Hamburg (DE); Fastert, Claus, 21129 Hamburg (DE)
(74) Representative: Schicker, Silvia

(57) **Abstract**

In a method for producing a component from a fibre-reinforced composite material, a semifinished product (16), containing reinforcing fibres, is disposed on a support surface (14) of a support (12). The semifinished product (16) is covered with a film (18), the film (18) being draped, in at least one portion, in such a manner that at least one fold (24), extending from the support surface (14) of the support (12), is produced. A sealing tape (20) is applied along an open edge of the fold (24), in order to seal off from the ambient atmosphere a space (19) defined by the support surface (14) and the film (18), in the region of the fold (24), such that two mutually opposite fold walls (26, 28) of the fold (24) are formed partly by the film (18) and partly by the sealing tape (20). A clip (44) is applied over the fold (24) in such a manner that the clip (44) applies a clamping force (F_{K}), which presses the mutually opposite fold walls (26, 28) of the fold (24) against each other. A vacuum is generated in the space (19) defined by the support surface (14) of the support (12) and the film (18).

## Description

The invention relates to a method and an apparatus for producing a component, in particular an aircraft structural component, from a fibre-reinforced composite material, in which use is made of a structure that comprises a mould for receiving a semifinished product, a semifinished product, and a vacuum film for sealing off the semifinished product from the ambient atmosphere.

In aircraft construction, efforts are increasingly being made to use components composed entirely or partially of fibre-reinforced composite materials, for example glass-fibre or carbon-fibre reinforced plastics. For example, DE 10 2007 062 111 A1 describes a crossmember structure, composed of carbon-fibre reinforced plastic, which serves to support the individual panels of an aircraft floor system for separating a passenger cabin from a cargo compartment disposed beneath the passenger cabin. It is additionally known, for example from DE 10 2004 001 078 A1 or CN 100418850, to provide aircraft fuselage segments with a skin and reinforcing elements (e.g. bulkheads, stringers) of fibre-reinforced composite materials.

Aircraft structural components of fibre-reinforced composite materials may be produced according to a vacuum infusion method or a vacuum-assisted resin transfer moulding (RTM) method, in which a moulding of individual fibres, fibre prewovens or fibre prepregs of an existing semifinished product is disposed in or on a mould, and the semifinished product is then sealed off from the ambient atmosphere by means of a vacuum film. A hardenable plastic material such as, for example, an epoxy resin material, is then injected into the semifinished product through infusion hoses, which are connected to couplings that extend through the vacuum film in a sealed manner. The hardenable plastic material injected into the semifinished product is finally hardened under elevated pressure and/or elevated temperature, so as to obtain a composite material that contains reinforcing fibres embedded in a matrix composed of the hardened plastic material. For this purpose, the structure comprising the mould, the semifinished product and the vacuum film may be put into an autoclave.

The invention is directed towards the object of specifying a method and an apparatus that make it possible to produce, in a reproducible manner and with uniformly high quality, a component, in particular an aircraft structural component, from a fibre-reinforced composite material by use of a structure that comprises a mould for receiving a semifinished product, a semifinished product, and a vacuum film for sealing off the semifinished product from the ambient atmosphere.

This object is achieved by a method having the features of Claim 1 and by an apparatus having the features of Claim 9.

In a method for manufacturing a component from a fibre-reinforced composite material, a semifinished product, containing reinforcing fibres, is disposed on a support surface of a support. The reinforcing fibres contained in the semifinished product may exist in the form of individual fibres or in the form of a fibre laying or fibre textile and be realized, for example, in the form of carbon fibres. Further, in addition to reinforcing fibres, the semifinished product may contain a plastic material. The plastic material may be, for example, a thermoplastic plastic material or a hardenable plastic material. For example, the semifinished product may contain a hardenable resin material, in particular an epoxy resin. In a preferred embodiment of the method, the semifinished product is realized in the form of a fibre prepreg, which comprises a textile or laying of reinforcing fibres provided with a surface coating of a hardenable plastic material.

A design of the support surface of the support is preferably matched to a design of the semifinished product carried on the support surface. For example, the support surface may be curved if the semifinished product is also of a curved design, this being the case, for example, if the semifinished product has a curved portion intended for production of a portion of an aircraft fuselage shell. In addition, the support surface may constitute a part of a surface of a recessed mould, in which the semifinished product can be disposed or accommodated.

The semifinished product disposed on the support surface of the support is covered with a film. The film is preferably a vacuum film, which is suitable for sealing off a space, enclosed by the film, from the ambient atmosphere. In at least one portion, the film is draped in such a manner that at least one fold, extending from the support surface of the support, is produced. If desired, a plurality of folds may be draped into the film. The at least one fold serves to avoid unwanted stresses in the film in the region of changes in the geometry of the semifinished product. In addition, allowance is also made for an amount of oversize of the film, by the formation of at least one fold, preferably in the region of an edge of the semifinished product.

A sealing tape is applied along an open edge of the fold, in order to seal off from the ambient atmosphere a space defined by the support surface and the film, in the region of the fold. This results in regions in which the sealing tape lies on the film, and in regions in which portions of the sealing tape lie on one another. Two mutually opposite fold walls of the fold are thus formed partly by the film and partly by the sealing tape. The sealing tape is preferably provided with an adhesive layer in the region of at least one surface, i.e. realized as a single-sided or double-sided self-adhesive sealing tape. The sealing tape may be pressed on, for example, manually or by means of a so-called roller applicator.

A clip is then applied over the fold in such a manner that the clip applies a clamping force, which presses the mutually opposite fold walls of the fold against each other. The clamping force applied by the clip thus counteracts separation of the sealing tape from the film and, in particular, separation of two sealing tape portions that are adhesively bonded to each other.

Finally, a vacuum is generated in the space defined by the support surface of the support and the film. In other words, a pressure that is less than the pressure of the ambient atmosphere surrounding the structure comprising the support, the semifinished product and the film is generated in the space defined by the support surface of the support and the film. For this purpose, the space defined by the support surface of the support and the film may be connected to a suitable vacuum source, for example a pump. The pump may be connected, for example, to a coupling that extends through the film in a sealed manner.

When the required reduced pressure is present in the space defined by the support surface of the support and the film, a plastic material, preferably a hardenable plastic material, may be injected, if required, into the semifinished product. The vacuum then ensures a rapid and uniform distribution of the plastic material in the semifinished product. Additionally or alternatively, the support, with the semifinished product and the film, may be put into an oven or autoclave to harden plastic material contained in the semifinished product, and treated therein under elevated temperature and/or elevated pressure. As the vacuum is generated in the space defined by the support surface of the support and the film, the at least one fold deforms, since the film portion forming the fold is sucked in the direction of the support surface of the support. Consequently, stress peaks occur, particularly in a region of the sealing tape, used for sealing the fold, that is adjacent to the support surface of the support, which stress peaks may result in absence of seal tightness. Moreover, movements of the fold that are induced by an airflow in an oven or autoclave may result in absence of seal tightness in the region of the sealing tape. Finally, thermal stresses produced during heat treatment of the structure comprising the support, the film and the semifinished product may also cause leakages in the region of the sealing tape.

The clip used in the method for producing a component from a fibre-reinforced composite material, as a result of the clamping force that it applies to press the mutually opposite fold walls of the fold against each other, counteracts stretching of the sealing tape in the edge region of the fold as the fold deforms. In the case of the method for producing a component from a fibre-reinforced composite material, the risk of absence of seal tightness, or leakages, in the region of the sealing tape is thus significantly reduced by the use of the clip. The clip thus makes it possible, in a comparatively inelaborate manner, to make the component production process significantly more robust.

The clip may be applied over the fold in such a manner that the clamping force applied by the clip presses the mutually opposite fold walls against each other in a region adjacent to the support surface of the support. The clip then counteracts stretching of the sealing tape precisely in the region of the fold walls in which stress peaks occur as the fold deforms, and which are therefore particularly susceptible to the occurrence of leakages.

The clip may comprise two mutually opposite limbs. The limbs of the clip may be connected to each other at their first ends and, at least in the region of their second ends opposite to the first ends, may each provided with a clamping portion for applying the clamping force to the mutually opposite fold walls of the fold. The clamping portions provided on the limbs of the clip may extend over merely a portion of the limbs, in the region of the second ends of the limbs. Such a design of the clip is appropriate, in particular, if the clip is intended to press the mutually opposite fold walls against each other only in a region adjacent to the support surface of the support. Alternatively, however, the clip may also have clamping portions that extend over the entire length of the limbs or over a significant part of the length of the limbs. The clip is then suitable for pressing the mutually opposite fold walls against each other also in a region spaced from the support surface of the support.

The clip may be elastically biased into a clamping position in which it presses the mutually opposite fold walls of the fold against each other. Alternatively, however, it is also possible to design the clip such that it must be manually pushed into its clamping position in which it presses the mutually opposite fold walls of the fold against each other. If desired, the clamp may comprise a locking device for locking the clip in a clamping position in which it presses the mutually opposite fold walls of the fold against each other. The clip can then be held in its clamping position in a particularly stable manner. For example, the clip may be realized in the form of a screw clamp, a latch, or the like. The clip may be realized as an injection moulded part or as a metal part.

In a preferred embodiment of the method for producing a component from a fibre-reinforced composite material, the clip is fastened to the support surface of the support by means of a fastening means. The clip is thereby prevented from tilting in an unwanted manner relative to the support surface of the support. In particular, the fastening means may be adapted to apply a pressing force, directed in the direction of the support surface of the support, onto the film and/or onto the sealing tape. Separation of the sealing tape and/or of the film from the support surface of the support is thereby counteracted. The fastening means may comprise, for example, a magnet arrangement, which acts in combination with a support composed of a magnetic material, for example a ferromagnetic material, in order to hold the clip in a desired position relative to the support surface of the support. Additionally or alternatively, the fastening means may comprise a holding device, which encompasses an edge of the support in order to fix the clip in its position relative to the support surface of the support. Such a holding device may than also be used to fix the clip in its position relative to the support surface of the support if the support is not composed of a magnetic material.

A dimension of the fold in a direction perpendicular to the support surface of the support may be set by means of a dimension defining means of the clamp. The dimension defining means may comprise, for example, a link extending between two mutually opposite limbs of the clip. For example, the fold may be draped in such a manner that the fold extends, starting from the support surface to the support, to the link provided between the limbs of the clip. The clip can thus be used to define a required shape of the fold. This makes it possible to design even a manual draping operation in a relatively reproducible manner.

In a preferred embodiment of the method, differing dimensions of a plurality of folds in the direction perpendicular to the support surface of the support are set by means of the dimension defining means of a plurality of differently shaped clips. The clips may differ, for example, in respect of the length of their limbs and/or the positioning of the dimension defining means comprising, for example, a link extending between the limbs, relative to the limbs. Moreover, if desired, the clips may be realized in a multiplicity of colours, or may be appropriately marked, in order to render suitable clips immediately identifiable for the production of differently shaped folds. This further increases the reproducibility of the process, and further simplifies the process as a whole.

The film may be provided with at least one position marking for marking a position and/or a dimension of the at least one fold to be draped. The position marking makes it possible to define the position and the shape of the fold in a comparatively precise and reproducible manner, even in the case of a manual draping operation. If desired, the film may be provided with a plurality of position markings for marking the positions and/or dimensions of a plurality of folds to be draped.

An apparatus for producing a component from a fibre-reinforced composite material comprises a support, having a support surface for disposing a semifinished product containing reinforcing fibres. The apparatus additionally comprises a film for covering the semifinished product, the film being adapted to be draped, in at least one portion, in such a manner that at least one fold, extending from the support surface of the support, is produced. A sealing tape of the apparatus is adapted to be applied along an open edge of the fold, in order to seal off from the ambient atmosphere a space defined by the support surface and the film, in the region of the fold, such that two mutually opposite fold walls of the fold are formed partly by the film and partly by the sealing tape. The apparatus additionally comprises a clip, which is adapted to be applied over the fold in such a manner that the clip applies a clamping force, which presses the mutually opposite fold walls of the fold against each other. Finally, the device comprises a vacuum generating means for generating a vacuum in the space defined by the support surface of the support and the film.

In a preferred embodiment of the apparatus, the clip is adapted to be applied over the fold in such a manner that the clamping force applied by the clip presses the mutually opposite fold walls against each other in a region adjacent to the support surface of the support.

The clip may comprise two mutually opposite limbs, which are connected to each other at their first ends and which, at least in the region of their second ends opposite to the first ends, are each provided with a clamping portion for applying the clamping force to the mutually opposite fold walls of the fold.

The clip may be elastically biased into a clamping position in which it presses the mutually opposite fold walls of the fold against each other. Additionally or alternatively, the clip may comprise a locking device for locking the clip in a clamping position in which it presses the mutually opposite fold walls of the fold against each other.

The clip may be fastened to the support surface of the support by means of a fastening means. The fastening means may be adapted to apply a pressing force, directed perpendicularly in relation to the support surface, onto the film and/or onto the sealing tape. The fastening means may comprise a magnet arrangement and/or a holding device, which encompass/encompasses an edge of the support.

Further, the clip may be equipped with a dimension defining means, which is adapted to set a dimension of the fold in a direction perpendicular to the support surface of the support. The dimension defining means may comprise a link extending between two mutually opposite limbs of the clip.

In a preferred embodiment, the apparatus comprises a plurality of differently shaped clips, which are adapted to set, by means of their respective dimension defining means, differing dimensions of a plurality of folds in the direction perpendicular to the support surface of the support.

The film may be provided with at least one position marking for marking a position and/or a dimension of the at least one fold to be draped.

Preferred embodiments of the invention are now explained in greater detail with reference to the appended schematic drawings, of which
- Figure 1: shows an apparatus for producing a component from a fibre-reinforced composite material,
- Figure 2: shows a detail representation of a fold draped into a film of the apparatus according to Figure 1,
- Figure 3: shows the fold according to Figure 2 with a clip applied over the fold,
- Figure 4: shows the fold according to Figure 2 with an alternative clip applied over the fold, and
- Figure 5: shows the fold according to Figure 2 with a further alternative clip applied over the fold.

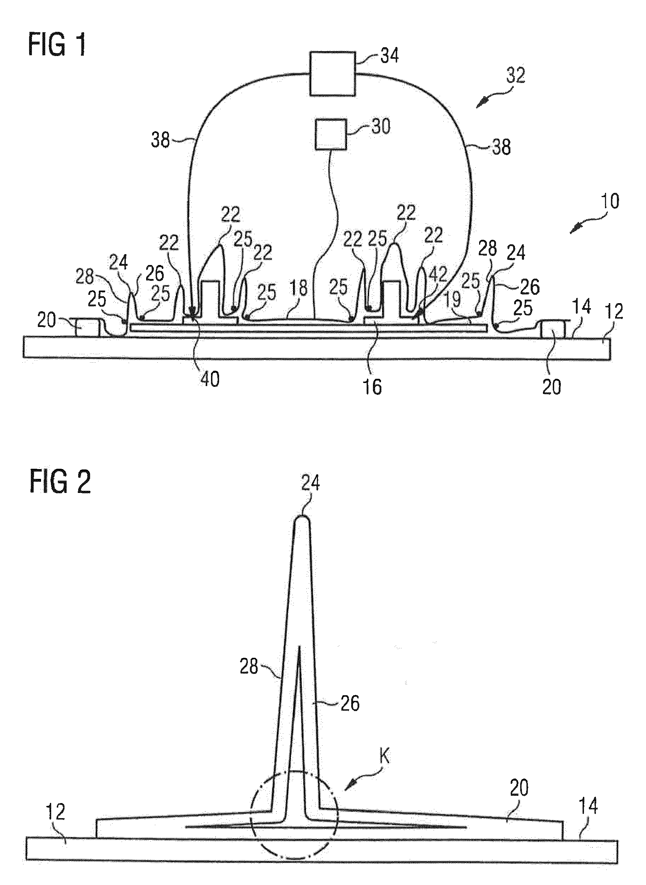

An apparatus 10, shown in Figure 1, for producing a component, in particular an aircraft structural component, from a fibre-reinforced composite material comprises a support 12 having a support surface 14. A semifinished product 16 containing reinforcing fibres can be disposed on the support surface 14 of the support 12. The exemplary semifinished product 16 shown in Figure 1 is a fibre prepreg, which comprises a woven fabric or laying of reinforcing fibres, in particular carbon fibres, which have been provided with a surface coating of a hardenable plastic material, in particular an epoxy resin. The semifinished product 16 is intended to be processed further to form an aircraft structural component that comprises an aircraft outer-skin portion and primary structural elements such as, for example, stringers, that are connected to the aircraft outer-skin portion.

The semifinished product 16 is covered with a film 18. The film 18 is realized in the form of a vacuum film that is suitable for sealing off a space 19, which is delimited by the support surface 14 and the film 18 and in which the semifinished product 16 is accommodated, from the ambient atmosphere. In the region of its edges, the film 18 is adhesive-bonded to the support surface 14 by means of a sealing tape 20 provided with an adhesive layer on both sides.

In the region of changes in the geometry of the semifinished product 16, portions of the film 18 are draped in such a manner that a plurality of folds 22 are formed. These folds 22 prevent the formation of unwanted stresses in the film 18. In addition, allowance is also made for an amount of oversize of the film 18, by the formation of folds 24 disposed in the region of an edge of the semifinished product 16. The folds 22, 24 each extend upwardly from the support surface 14 of the support 12. In order to facilitate the draping of the folds 22, 24 into the film 18, the film is provided with position markings 25 for marking the positions of the folds 22, 24 to be draped. In order for the space 19 defined by the support surface 14 and the film 18 to be sealed off from the ambient atmosphere in the region of the folds 22, 24 also, the sealing tape 20 is applied along an open edge of each fold 22, 24, as shown in Figure 2. Mutually opposite fold walls 26, 28 of the folds 22, 24 are thus formed partly by the film 18 and partly by the sealing tape 20.

The apparatus 10 additionally comprises a vacuum generating means 30, which may be realized, for example, in the form of a pump. The vacuum generating means 30 serves to generate a vacuum, i.e. a pressure that is reduced in respect of the ambient pressure, in the space 19 defined by the support surface 14 of the support 12 and the film 18. Finally, the apparatus 10 is equipped with an injection device 32, which serves to inject a hardenable plastic material, for example an epoxy resin, into the semifinished product 16. The injection device 32 comprises a plastic material reservoir 34, which is connected, via corresponding connecting hoses 36, 38, to corresponding couplings 40, 42, that extend through the film 18 in a sealed manner.

When a pressure, generated by means of the vacuum generating means 30, that is less than the ambient pressure prevails in the space 19 accommodating the semifinished product 16, plastic material injected by means of the injection device 32 is distributed rapidly and uniformly in the semifinished product 16. For the purpose of hardening the plastic material, which is present in any case in the semifinished product 16 realized in the form of a prepreg, and the plastic material injected into the semifinished product 16, the structure comprising the support 12, the semifinished product 16 and the film 18 can be subjected to an elevated pressure and/or elevated temperature in an oven or autoclave (not shown in the figures).

As the vacuum is generated in the space 19 defined by the support surface 14 of the support 12 and the film 18, the folds 22, 24 deform, since the film portions forming the folds 22, 24 are sucked in the direction of the support surface 14. In addition, the folds 22, 24 may be made to move by an air-flow in an oven or autoclave used to harden the plastic material contained in the semifinished product 16 and/or injected into the semifinished product 16. Finally, thermal stresses may occur during a heat treatment of the structure comprising the support 12, the film 18 and the semifinished product 16. Consequently, stress peaks occur, particularly in regions of the sealing tape 20, used for sealing the folds 22, 24, that are adjacent to the support surface 14, which stress peaks may result in absence of seal tightness. This so-called "critical region" is identified in Figure 2 by the reference K.

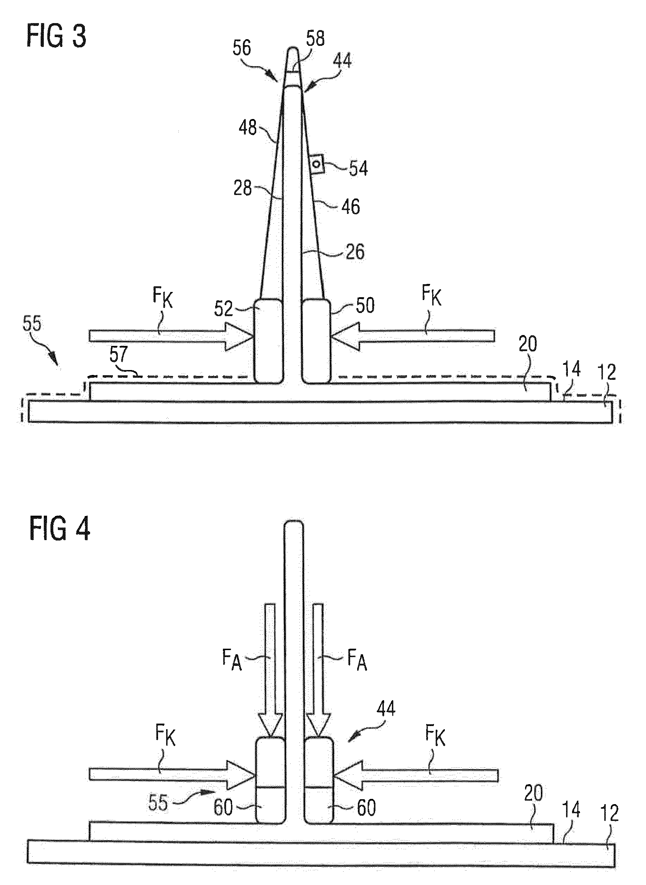

The apparatus 10 therefore additionally comprises a plurality of clips 44, which are applied over each fold 24 in such a manner that the mutually opposite fold walls 26, 28 of the folds 24, which are formed partly by the film 18 and partly by the sealing tape 20, are pressed against each other by a clamping force F_{K} applied by the clips 44, see Figure 3. In the case of deformation of the fold 24 subjected to the clamping force F_{K} applied by the clamp 44, the clamping force F_{K} applied by each clip 44 counteracts stretching of the sealing tape 20 in the edge region of the fold 24. The risk of absence of seal tightness, or leakages, in the region of the sealing tape 20 is thereby significantly reduced.

The clip 44 illustrated in Figure 3 comprises two mutually opposite limbs 46, 48, which are connected to each other in the region of their first ends. In the region of their second ends, which are opposite to their first ends, the limbs 46, 48 of the clip 44 are each provided with a clamping portion 50, 52. By pressing the clamping portions 50, 52 against each other, the clip 44 applies the clamping force F_{K} to a region of the mutually opposite fold walls 26, 28 that is adjacent to the support surface 14 of the support 12, i.e. to the critical region K subjected to the stress peaks.

The clip 44 shown in Figure 3 comprises a locking device 54 (indicated in schematic form only in Figure 3), which enables the clip 44 to be held securely in a clamping position in which it presses the mutually opposite fold walls 26, 28 of the fold 24 against each other. Furthermore, the clip 44 is provided with a fastening means 55, indicated only by a broken line in Figure 3, for fastening the clip 44 to the support surface 14 of the support 12. The fastening means 55 comprises a holding device 57, which encompasses an edge of the support 12 and thereby fixes the clip 44 securely relative to the support surface 14 of the support 12.

The clip 44 additionally comprises a dimension defining means 56. In the embodiment shown in Figure 3, the dimension defining means 56 comprises a link 58, which extends between the two mutually opposite limbs 46, 48 of the clip 44. The fold 24 can then be draped such that the fold 24 extends, starting from the support surface 14 o the support 12, to the link 58 provided between the limbs 46, 48 of the clip 44. The clip can thus be used to define a required shape of the fold 24, and thus to design even a manual draping operation in a relatively reproducible manner.

If a plurality of folds 24, having differing shapes and/or dimensions, are to be draped into the film 18, clips 44 of differing designs may be used. In particular, clips 44 that differ in respect of the length of their limbs 46, 48 and/or the positioning of the link 58 extending between the limbs 46, 48 may be used to set as required differing measurements of a plurality of folds 24 in the direction perpendicular to support surface 14 of the support 12. If desired, the clips 44 may be realized in a multiplicity of colours, or may be appropriately marked, in order to render suitable clips 44 immediately identifiable for the production of differently shaped folds 24.

The clip 44 illustrated in Figure 4 differs from the clip according to Figure 3 in that it not only applies a clamping force F_{K} to a region of the mutually opposite fold walls 26, 28 of the fold 24 that is adjacent to the support surface 14 of the support 12, but also presses the film 18 and the sealing tap 20 in the region of the fold 24 against the support surface 14, i.e. applies a pressing force F_{A}, directed perpendicularly in relation to the support surface 14, onto the film 18 and the sealing tape 20. For this purpose, the fastening means 55 of the clip 44 comprises a magnet arrangement 60, which acts in combination with the support 12 made of a magnetic material, for example a ferromagnetic metal. The clip 44 thus also counteracts separation of the sealing tape 20, and consequently of the film 18, from the support surface 14. Depending on its design, the holding device 55 illustrated in Figure 3 that encompasses the edge of the support 12 is also suitable to apply such a pressing force F_{A}, directed perpendicularly in relation to the support surface 14, onto the film 18 and the sealing tape 20. However, a dimension defining means 56, as provided in the case of the clip 44 according to Figure 3, has been dispensed with in the case of the clip 44 represented in Figure 4.

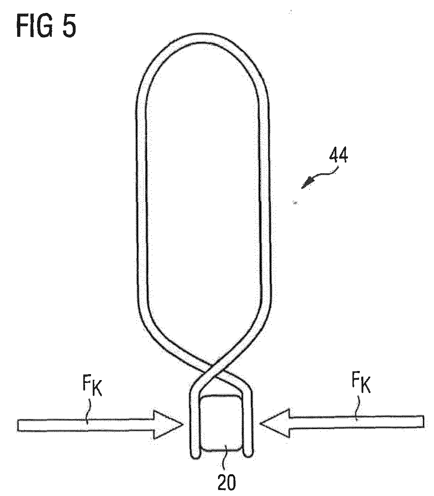

Figure 5 shows a further variant of a clip 44, which is elastically biased into a clamping position in which it presses the mutually opposite fold walls 26, 28 of the fold 24 against each other. The clip 44 shown in Figure 5 can therefore be positioned in a particularly simple and convenient manner.

It is understood that the clips 44 shown and described in detail here represent merely preferred embodiments, and that features explained here in connection with individual embodiments may be combined with one another in any manner. Thus, for example, the clip 44 shown in Figure 4 may be equipped with a dimension defining means 56. Further, a magnet arrangement adapted to apply a pressing force F_{A}, directed perpendicularly in relation to the support surface 14, onto the film 18 and the sealing tape 20, may also be integrated into a clip 44 illustrated in Figure 3.

## Claims

1. Method for producing a component from a fibre-reinforced composite material, comprising the steps:
- disposing a semifinished product (16), containing reinforcing fibres, on a support surface (14) of a support (12),
- covering the semifinished product (16) with a film (18), the film (18) being draped, in at least one portion, in such a manner that at least one fold (24), extending from the support surface (14) of the support (12), is produced,
- applying a sealing tape (20) along an open edge of the fold (24), in order to seal off from the ambient atmosphere a space (19) defined by the support surface (14) and the film (18), in the region of the fold (24), such that two mutually opposite fold walls (26, 28) of the fold (24) are formed partly by the film (18) and partly by the sealing tape (20),
- applying a clip (44) over the fold (24) in such a manner that the clip (44) applies a clamping force (F_{K}), which presses the mutually opposite fold walls (26, 28) of the fold (24) against each other, and
- generating a vacuum in the space (19) defined by the support surface (14) of the support (12) and the film (18).

2. Method according to Claim 1,
the clip (44) being applied over the fold (24) in such a manner that the clamping force (F_{K}) applied by the clip (44) presses the mutually opposite fold walls (26, 28) against each other in a region adjacent to the support surface (14) of the support (12).

3. Method according to Claim 1 or 2,
the clip (44) comprising two mutually opposite limbs (46, 48), which are connected to each other at their first ends and which, at least in the region of their second ends opposite to the first ends, are each provided with a clamping portion (50, 52) for applying the clamping force (F_{K}) to the mutually opposite fold walls (26, 28) of the fold (24).

4. Method according to any one of Claims 1 to 3,
the clip (44) being elastically biased into a clamping position in which it presses the mutually opposite fold walls (26, 28) of the fold (24) against each other, and/or the clip (44) comprising a locking device (54) for locking the clip (44) in a clamping position in which it presses the mutually opposite fold walls (26, 28) of the fold (24) against each other.

5. Method according to any one of Claims 1 to 4,
the clip (44) being fastened to the support surface (14) of the support (12) by means of a fastening means (55), which preferably applies a pressing force (F_{A}), directed perpendicularly in relation to the support surface (14), onto at least one of the film (18) and the sealing tape (20), and which, in particular, comprises at least one of a magnet arrangement (60) and a holding device (57), which encompasses an edge of the support (12).

6. Method according to any one of Claims 1 to 5,
a dimension of the fold (24) in a direction perpendicular to the support surface (14) of the support (12) being set by means of a dimension defining means (56) of the clip (44) that, in particular, comprises a link (58) extending between two mutually opposite limbs (46, 48) of the clip (44).

7. Method according to Claim 6,
differing dimensions of a plurality of folds (24) in the direction perpendicular to the support surface (14) of the support (12) being set by means of the dimension defining means (56) of a plurality of differently shaped clips (44).

8. Method according to any one of Claims 1 to 6,
the film (18) being provided with at least one position marking for marking at least one of a position and a dimension of the at least one fold (24) to be draped.

9. Apparatus (10) for producing a component from a fibre-reinforced composite material, which comprises:
- a support (12), having a support surface (14) for disposing a semifinished product (16) containing reinforcing fibres,
- a film (18) for covering the semifinished product (16), the film (18) being adapted to be draped, in at least one portion, in such a manner that at least one fold (24), extending from the support surface (14) of the support (12), is produced,
- a sealing tape (20), which is adapted to be applied along an open edge of the fold (24), in order to seal off from the ambient atmosphere a space (19) defined by the support surface (14) and the film (18), in the region of the fold (24), such that two mutually opposite fold walls (26, 28) of the fold (24) are formed partly by the film (18) and partly by the sealing tape (20),
- a clip (44), which is adapted to be applied over the fold (24) in such a manner that the clip (44) applies a clamping force (F_{K}), which presses the mutually opposite fold walls (26, 28) of the fold (24) against each other, and
- a vacuum generating means (30) for generating a vacuum in the space (19) defined by the support surface (14) of the support (12) and the film (18).

10. Apparatus according to Claim 9,
the clip (44) being adapted to be applied over the fold (24) in such a manner that the clamping force (F_{K}) applied by the clip (44) presses the mutually opposite fold walls (26, 28) against each other in a region adjacent to the support surface (14) of the support (12).

11. Apparatus according to Claim 9 or 10,
the clip (44) comprising two mutually opposite limbs (46, 48), which are connected to each other at their first ends and which, at least in the region of their second ends opposite to the first ends, are each provided with a clamping portion (50, 52) for applying the clamping force (F_{K}) to the mutually opposite fold walls (26, 28) of the fold (24).

12. Apparatus according to any one of Claims 9 to 11,
the clip (44) being elastically biased into a clamping position in which it presses the mutually opposite fold walls (26, 28) of the fold (24) against each other, and/or the clip (44) comprising a locking device (54) for locking the clip (44) in a clamping position in which it presses the mutually opposite fold walls (26, 28) of the fold (24) against each other.

13. Apparatus according to any one of Claims 9 to 12,
the clip (44) being fastened to the support surface (14) of the support (12) by means of a fastening means (55), the fastening means (55) preferably being adapted to apply a pressing force (F_{A}), directed perpendicularly in relation to the support surface (14), onto at least one of the film (18) and the sealing tape (20), and comprising, in particular, at least one of a magnet arrangement (60) and a holding device (57), which encompasses an edge of the support (12),
and/or
the clip (44) comprising a dimension defining means (56), which is adapted to set a dimension of the fold (24) in a direction perpendicular to the support surface (14) of the support (12) and which, in particular, comprises a link (58) extending between two mutually opposite limbs (46, 48) of the clip (44).

14. Apparatus according to Claim 13,
the apparatus (10) comprising a plurality of differently shaped clips (44), which are adapted to set, by means of their respective dimension defining means (56), differing dimensions of a plurality of folds (24) in the direction perpendicular to the support surface (14) of the support (12).

15. Apparatus according to any one of Claims 9 to 14,
the film (18) being provided with at least one position marking for marking at least one of a position and a dimension of the at least one fold (24) to be draped.
